# EUROPEAN PATENT APPLICATION

(11) **EP 3 760 923 A1**
(43) Date of publication of application: **06.01.2021**
(21) Application number: 19761039.7
(22) Date of filing: 24.01.2019
(51) Int. Cl.: F22G 3/00, A47J 27/00, F22G 1/16, F24C 1/00

(54) **SUPERHEATED STEAM GENERATOR AND COOKER**

(30) Priority: 28.02.2018 JP 2018034108; 23.08.2018 JP 2018155890
(71) Applicant: Panasonic Intellectual Property Management Co., Ltd., Osaka-shi, Osaka 540-6207 (JP)
(72) Inventor: NOMURA, Shuhei, Osaka 540-6207 (JP); NITTA, Hiroaki, Osaka 540-6207 (JP); GOTO, Takao, Osaka 540-6207 (JP); HIRAISHI, Yuji, Osaka 540-6207 (JP)
(74) Representative: SSM Sandmair
(86) International application number: PCT/JP2019/002160
(87) International publication number: WO 2019/167488

(57) **Abstract**

Superheated steam generator (10a) includes pipe (11) through which steam passes, heat exchange promoting unit (15) disposed inside pipe (11), heater (12) disposed outside pipe (11) substantially parallel to pipe (11), and heat transfer unit (13) disposed between pipe (11) and heater (12). In superheated steam generator (10a), heat from heater (12) heats pipe (11) through heat transfer unit (13), and then steam passing through pipe (11) comes in contact with the inner surface of pipe (11) to overheat the steam. According to the aspect, the contact area between steam and a heat source can be increased to raise the heating efficiency.

## Description

### TECHNICAL FIELD

The present disclosure relates to a superheated steam generator that generates steam at 100°C or higher and to a cooker that includes the superheated steam generator.

### BACKGROUND

A conventional superheated steam generator is disclosed in PTLs 1 and 2 for example. FIG. 21 is a schematic sectional view of the superheated steam generator described in PTL 1. As shown in FIG. 21, this superheated steam generator includes case 51 and rod-shaped heater 52. Heater 52 has end 52a and heating unit 52b. Heating unit 52b is disposed inside case 51 passing through sidewall 51a of case 51. End 52a is in contact with case 51.

This superheated steam generator heats steam introduced into case 51 through steam inlet 51c using heating unit 52b of heater 52 to generate superheated steam, and discharges the superheated steam through superheated steam outlet 51d.

In this superheated steam generator, end 52a of heater 52 is in contact with case 51, allowing heat from heater 52 to be directly transmitted to case 51. This heats steam inside case 51 by means of heater 52 and the inner surface of case 51. This promotes not only heating of superheated steam but also downsizing of the device.

FIG. 22 is a schematic sectional view of the superheated steam generator described in PTL 2. As shown in FIG. 22, the superheated steam generator includes pipe 61 made of a nonmagnetic metal, heat exchanger 62 disposed inside pipe 61, coil bobbin 63 disposed so as to encompass the outer circumferential surface of pipe 61, and induction heating coil 64 disposed on the outer circumferential surface of coil bobbin 63.

This superheated steam generator, when induction heating coil 64 has been driven, inductively heats pipe 61 and heat exchanger 62, which heats steam introduced into pipe 61.

In this superheated steam generator, pipe 61 is made of austenitic stainless-steel. This causes induction heating to heat the outer and inner surfaces of pipe 61 and heat exchanger 62 of pipe 61. As a result, the heated inner surface of pipe 61 and heat exchanger 62 heat steam inside pipe 61.

Besides, using induction heating coil 64 as a heat source allows the pipe to be connected only at its two ends for example. Reducing the number of connecting parts reduces the risk of breakage of connecting parts, thus raising the reliability.

### Citation List

### Patent Literature

PTL 1: Japanese Patent Unexamined Publication No. 2012-176195
PTL 2: Japanese Patent Unexamined Publication No. 2016-44880

### SUMMARY

In the superheated steam generator of PTL 1, heater 52 as a heat source is disposed inside case 51. The wall thickness of case 51 is approximately 0.5 mm, resulting in a small contact area between heater 52 and case 51. Contact is made at an end of heater 52, which generates a small amount of heat, and thus a small thermal flux is transmitted from heater 52 to case 51.

Accordingly, the heating capacity of case 51 outside steam is lower than that of heater 52 inside steam, and the steam is heated mainly through heat transmitted from heater 52 disposed inside case 51.

To heat steam, however, a larger area contacting a higher-temperature heat source provides higher heat exchange efficiency. Accordingly, a heat source inside the cylindrical flow path through which steam passes provides a smaller area contacting a higher-temperature heat source, as compared to that outside the flow path, which lowers the heat exchange efficiency.

In the superheated steam generator of PTL 2, pipe 61 and heat exchanger 62 are heated by induction heating coil 64 disposed so as to encompass the outer circumferential surface of pipe 61, and thus the inner surface of pipe 61 and heat exchanger 62 work as a heat source for steam passing through the inside of pipe 61.

Where induction heating coil 64 is disposed on the outer circumferential surface of a column-shaped object to be heated, more heat is generated at the surface of the object; less, toward the inside. Accordingly, when pipe 61 and heat exchanger 62 are induction-heated, the inner surface of pipe 61 generates more heat than heat exchanger 62. A high-temperature heat source of a larger contact area provides higher heat exchange efficiency.

Heating by induction heating coil 64, however, generates more heat at its central part in the central axis direction of induction heating coil 64, where the magnetic field concentrates. Besides, a longer distance between induction heating coil 64 and an object to be heated provides more heat at the central part.

Typically, the heat resistance of the insulating coating of induction heating coil 64 and its support member is approximately 250°C. For safety, a certain degree of gap is needed between pipe 61 and induction heating coil 64. Accordingly, induction heating coil 64 is likely to cause heating concentration at its central part.

Due to this distributed heat source, steam passing through the inside of pipe 61 is heated near the central part of induction heating coil 64; however, the temperature of pipe 61 at a part other than the central part is lower than that of the central part. This reduces the temperature difference from the temperature-raised steam, lowering the heat exchange efficiency.

If pipe 61 and heat exchanger 62 are made of a nonmagnetic metal, the efficiency of heating by induction heating decreases, which increases the loss due to heat generation at induction heating coil 64 and the control circuit.

In the present disclosure, a heater disposed outside the pipe through which steam passes and a heat transfer unit that transmits heat from the heater to the pipe are placed, which moderates the distributed heat source of the pipe and reduces the loss of heat at the control circuit, for example, other than the heat source. This provides a superheated steam generator that raises the heating efficiency and a cooker that includes the superheated steam generator.

A superheated steam generator of one aspect of the present disclosure includes a pipe through which steam passes, a heat exchange promoting unit disposed inside the pipe, a heater disposed outside the pipe and substantially parallel to the pipe, and a heat transfer unit disposed between the pipe and the heater.

According to the aspect, heat from the heater heats the pipe through the heat transfer unit, and then the inner surface of the pipe comes in contact with steam passing through the pipe to overheat the steam. This moderates the distributed heat source of the pipe and reduces the loss of heat at the control circuit, for example, other than the heat source, which raises the heating efficiency.

### BRIEF DESCRIPTION OF DRAWINGS

FIG. 1 is a perspective view of a superheated steam generator according to the first exemplary embodiment of the present disclosure.
FIG. 2 is a top view of the superheated steam generator according to the first exemplary embodiment.
FIG. 3 is a sectional view taken along line 3-3 in FIG. 2.
FIG. 4 is a side view of the superheated steam generator according to the first exemplary embodiment.
FIG. 5 is a sectional view taken along line 5-5 in FIG. 4.
FIG. 6 is a sectional view taken along line 6-6 in FIG. 4.
FIG. 7 is a main part sectional view of the superheated steam according to the first exemplary embodiment, showing steam flowing inside the pipe.
FIG. 8 is a main part sectional view of the superheated steam generator according to the first exemplary embodiment, showing steam flowing inside the pipe after the helical body has undergone thermal expansion.
FIG. 9 is a perspective view of the superheated steam generator according to the first exemplary embodiment, showing another configuration example.
FIG. 10 is a schematic diagram of an oven that includes the superheated steam generator according to the first exemplary embodiment.
FIG. 11 is a perspective view of a superheated steam generator according to the second exemplary embodiment of the present disclosure.
FIG. 12 is an exploded perspective view of the superheated steam generator according to the second exemplary embodiment.
FIG. 13 is an external view of the superheated steam generator, viewed in direction X in FIG. 11.
FIG. 14 is an external view of the superheated steam generator, viewed in direction Y in FIG. 11.
FIG. 15 is a sectional view taken along line 15-15 in FIG. 13.
FIG. 16 is a sectional view taken along line 16-16 in FIG. 14.
FIG. 17 is a sectional view taken along line 17-17 in FIG. 14.
FIG. 18 is a schematic diagram of an oven that includes the superheated steam generator according to the second exemplary embodiment.
FIG. 19 is a perspective view of a superheated steam generator according to the third exemplary embodiment of the present disclosure.
FIG. 20 is an exploded perspective view of the superheated steam generator according to the third exemplary embodiment.
FIG. 21 is a schematic sectional view of the superheated steam generator described in PTL 1.

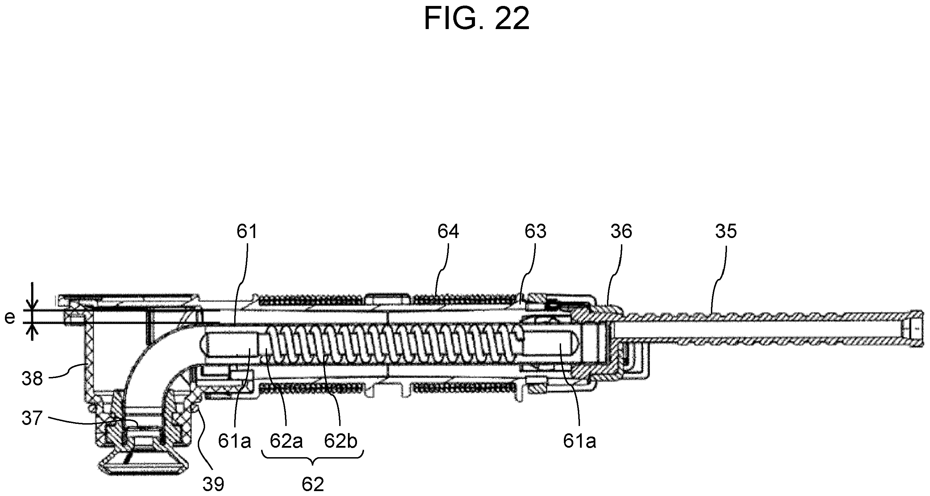

FIG. 22 is a schematic sectional view of the superheated steam generator described in PTL 2.

### DESCRIPTION OF EMBODIMENTS

A superheated steam generator according to the first aspect of the present disclosure includes a pipe through which steam passes, a heat exchange promoting unit disposed inside the pipe, a heater disposed outside the pipe and substantially parallel to the pipe, and a heat transfer unit disposed between the pipe and the heater.

In a superheated steam generator of the second aspect of the present disclosure, the heat exchange promoting unit includes a shaft and a helical body wound around the shaft, in addition to the first aspect.

In a superheated steam generator of the third aspect of the present disclosure, the heater has a curved shape; the curved part is disposed at the part of the pipe close to its steam outlet; and the end of the heater is disposed at the part of the pipe close to its steam inlet, in addition to the first aspect.

In a superheated steam generator of the four aspect of the present disclosure, the helical body, when temperature-rising, thermally expands to fill or to narrow the gap between the pipe and the helical body and the gap between the helical body and the shaft, in addition to the first aspect.

A superheated steam generator of the fifth aspect of the present disclosure further includes a heat insulator covering the heat transfer unit, in addition to the first aspect.

A superheated steam generator of the sixth aspect of the present disclosure further includes a heating container, a water feed opening through which water is fed to the heating container, and a vaporizing heater that heats the heating container to vaporize water fed to the heating container through the water feed opening, in addition to the first aspect.

The pipe is configured to pass steam generated by the vaporizing heater. The heater is an overheating heater that heats the pipe to overheat steam passing through the inside of the pipe. Each of the vaporizing heater and the overheating heater has two or more straight-line parts. The minimum value of the axis-to-axis distance between the vaporizing heater and the overheating heater is smaller than the maximum value of the axis-to-axis distance of the straight-line part of the vaporizing heater, and is smaller than the maximum value of the axis-to-axis distance of the straight-line part of the overheating heater.

In a superheated steam generator of the seventh aspect of the present disclosure, the heating container is configured so that water fed through the water feed opening moves along the vaporizing heater, in addition to the sixth aspect. The pipe is configured so that steam generated by the vaporizing heater moves along the vaporizing heater or the overheating heater.

In a superheated steam generator of the eighth aspect of the present disclosure, the vaporizing heater, the pipe, and the overheating heater are in tight contact with the heating container, in addition to the sixth aspect.

A superheated steam generator of the ninth aspect of the present disclosure further includes a heat transfer unit provided between the pipe and the overheating heater; a vaporizing unit that includes a heating container, a water feed opening, and a vaporizing heater; and an overheating unit that includes a pipe, an overheating heater, and a heat transfer unit, in addition to the sixth aspect. The vaporizing unit and the overheating unit are joined together with a connecting part.

A cooker of the tenth aspect of the present disclosure includes one of the superheated steam generators of the first through ninth aspects.

Hereinafter, some exemplary embodiments of the present disclosure are described with reference to the related drawings.

### FIRST EXEMPLARY EMBODIMENT

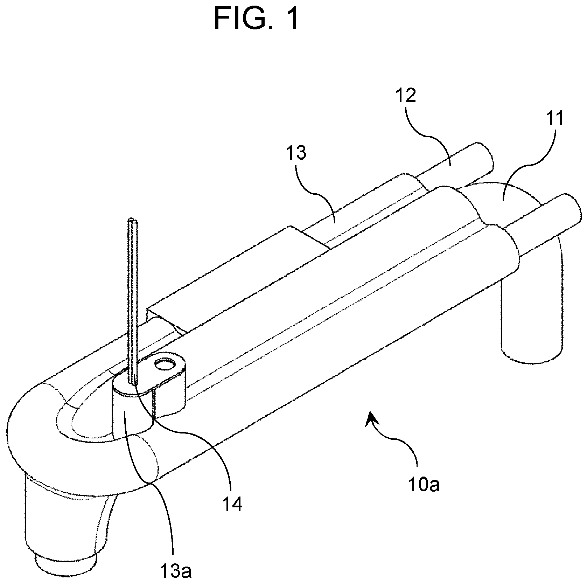

FIG. 1 is a perspective view of superheated steam generator 10a according to the first exemplary embodiment of the present disclosure. As shown in FIG. 1, superheated steam generator 10a includes pipe 11 through which steam passes, heater 12 disposed outside pipe 11 and substantially parallel to pipe 11, and heat transfer unit 13 disposed between pipe 11 and heater 12. Heat transfer unit 13 fills the gap between pipe 11 and heater 12 and also covers the peripheries of pipe 11 and heater 12.

Heat transfer unit 13 is made of a material with high thermal conductivity such as aluminum, where heater 12 and pipe 11 are casted into aluminum. This allows heat from the surface of heater 12 to be rapidly transmitted to pipe 11 through aluminum.

Resultingly, heater 12 disposed outside pipe 11 heats pipe 11. The inner surface of pipe 11 works as a heat source that heats steam passing through pipe 11, from the outside. Steam passing through pipe 11 is discharged outside superheated steam generator 10a in the form of superheated steam at 100°C or higher.

By covering the peripheries of heater 12 and pipe 11 with aluminum, heat from heater 12 is transmitted not only to the surface of heater 12 but also to the center of heater 12 and the upper and lower parts of pipe 11. This allows entire pipe 11 to be heated more uniformly.

If heater 12 is a sheath heater for example, the internal heating wire directly generates heat, and thus when a nonmagnetic metal is heated by induction heating, the induction heating coil and the control circuit do not cause loss due to heat.

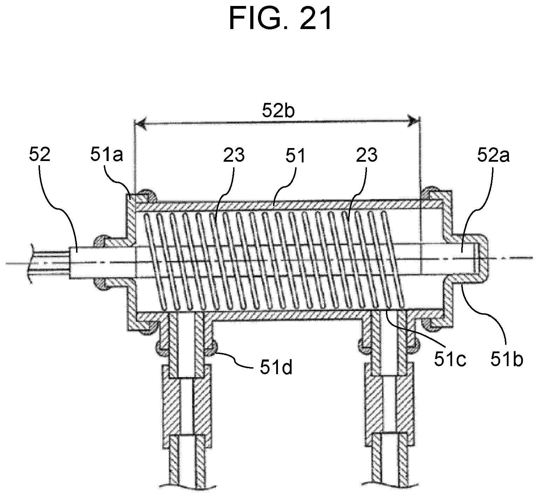

In the superheated steam generator described in PTL 1, the inner surface of case 51 works as an outside heat source for steam passing through case 51 as shown in FIG. 21. Heat from heating unit 52b of heater 52 is conducted from an end of case 51 to its center through sidewall 51a to heat entire case 51.

With this configuration, the cross sections of heating unit 52b and case 51 are smaller than the surface area of heating unit 52b, and thus a small amount of heat is transferred from heating unit 52b to case 51. Accordingly, the temperature of case 51 (i.e., an outside heat source for steam) is lower than that of heating unit 52b (i.e., an inside heat source for steam). A high-temperature heat source is placed inside case 51 that has a small surface contacting steam, lowering the heat exchange efficiency.

In the superheated steam generator described in PTL 2, induction heating coil 64 disposed so as to encompass the outer circumferential surface of pipe 61 heats pipe 61 and heat exchanger 62. As a result, the inner surface of pipe 61 and heat exchanger 62 work as a heat source for steam passing through the inside of pipe 61.

Induction heating coil 64 and coil bobbin 63, however, are usually made of a heat-resistant resin such as fluorine, where its heat resistance is typically 250°C or lower. Accordingly, superheated steam at 250°C or higher is not easy to generate.

In this embodiment, heat transfer unit 13 is made of a material with a heat resistance of 250°C or higher to increase the temperature of superheated steam to 250°C or higher. A sheath heater for example eliminates the need for an inverter circuit, which is required for induction heating, simplifying the control circuit, thus reducing the cost. Besides, holding part 13a provided at heat transfer unit 13 eliminates an attaching part for temperature sensor 14.

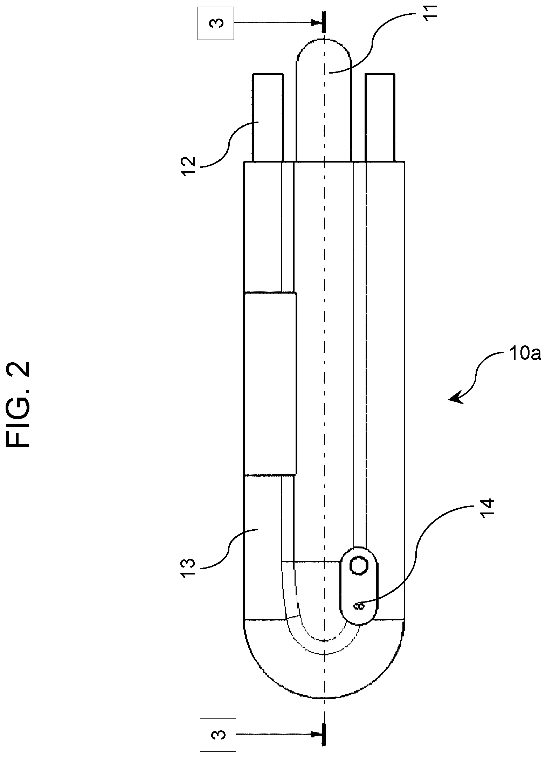

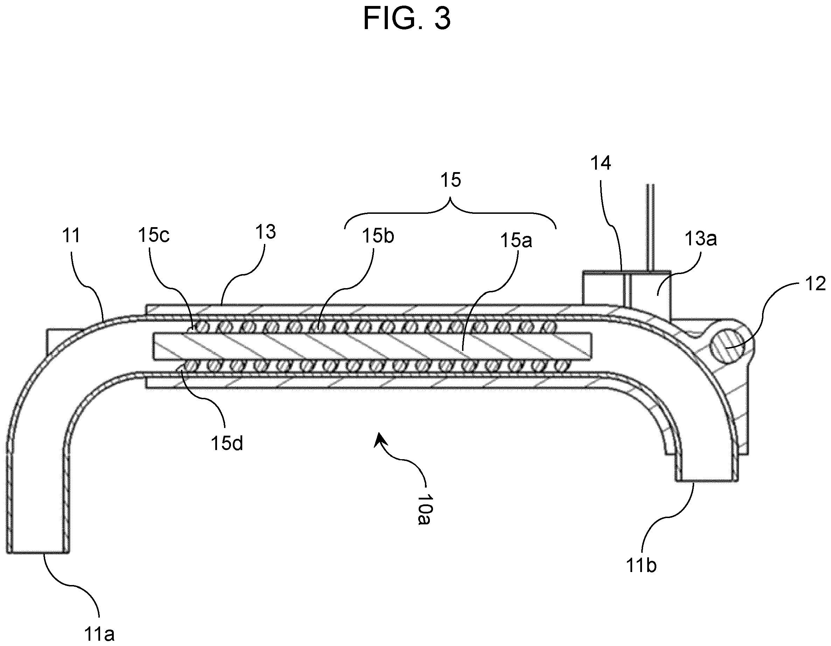

FIG. 2 is a top view of superheated steam generator 10a. FIG. 3 is a sectional view taken along line 3-3 in FIG. 2. As shown in FIG. 3, there is heat exchange promoting unit 15 disposed inside pipe 11. Heat exchange promoting unit 15 includes shaft 15a disposed at the center of pipe 11 and helical body 15b wound around shaft 15a. Shaft 15a and helical body 15b are welded to each other at connecting part 15c where helical body 15b and shaft 15a are connected together and at connecting part 15d where helical body 15b and pipe 11 are connected together.

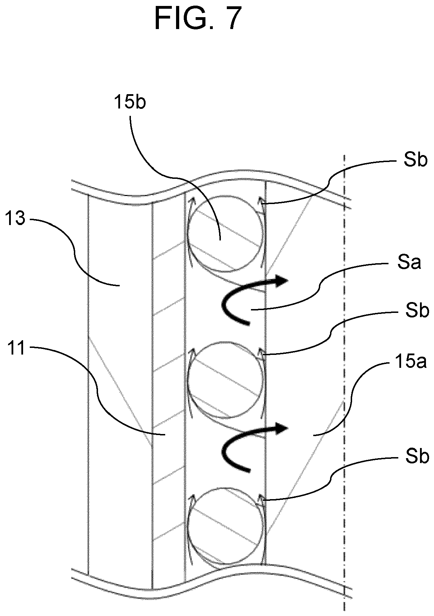

FIG. 7 is a main part sectional view of superheated steam generator 10a, showing steam flowing inside the pipe. Steam from steam inlet 11a shown in FIG. 3 flows along the outside of shaft 15a at the central part of pipe 11. Subsequently, the steam flows along helical body 15b (steam Sa in FIG. 7) while flowing along pipe 11 through the gap between shaft 15a and helical body 15b and through the gap between helical body 15b and pipe 11 (steam Sb in FIG. 7).

Steam flowing along helical body 15b has a large area contacting the inner surface of pipe 11, which provides high heat exchange efficiency. Besides, the heat exchange efficiency can be increased by passing steam flowing along pipe 11 through the proximity of the inner surface of pipe 11 by means of shaft 15a. Here, steam through steam inlet 11a has a temperature near 100°C that has been produced by the steam generating unit such as a boiler (unillustrated).

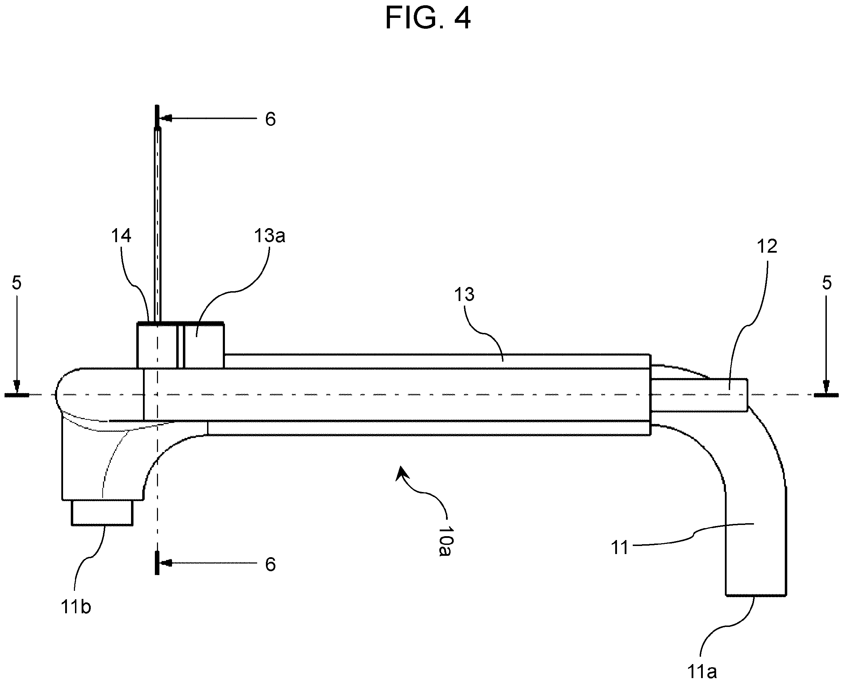

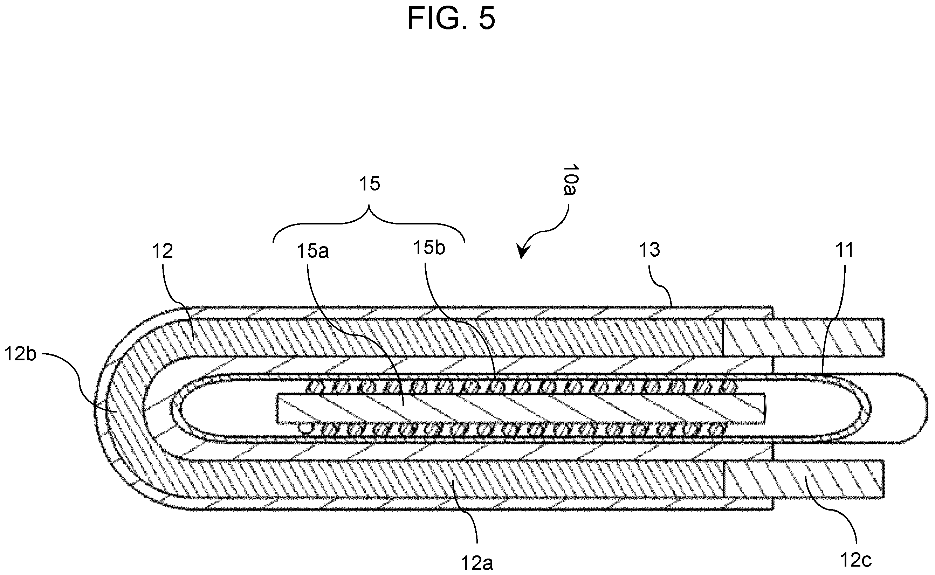

FIG. 4 is a side view of superheated steam generator 10a. FIG. 5 is a sectional view taken along line 5-5 in FIG. 4. As shown in FIG. 5, heater 12 includes heating unit 12a that generates heat and end 12c that is formed continuously to heating unit 12a and does not generate heat. Heater 12 has a U shape curved at curved part 12b.

Entire heating unit 12a is disposed inside heat transfer unit 13. Part of end 12c is disposed inside heat transfer unit 13 and the rest of end 12c is disposed outside heat transfer unit 13. This allows the entire heat from heater 12 to be conducted to pipe 11 through heat transfer unit 13.

If heating unit 12a is provided outside heat transfer unit 13, heat from heating unit 12a is not transmitted to heat transfer unit 13, where the heat is not consumed for heating steam. This can cause an abnormal rise in temperature. In this embodiment, disposing entire heating unit 12a inside heat transfer unit 13 can prevent an abnormal heat generation.

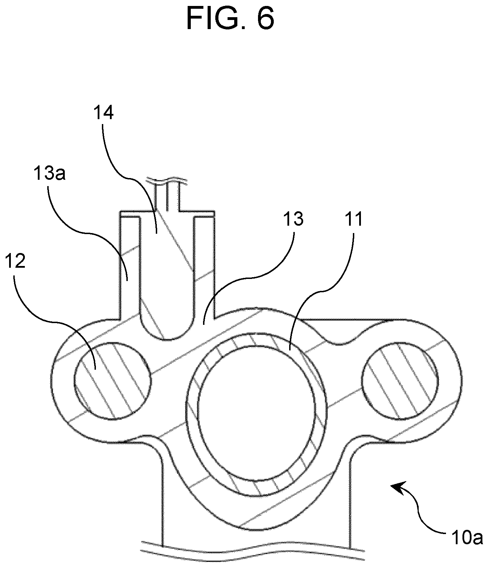

FIG. 6 is a sectional view taken along line 6-6 in FIG. 4. As shown in FIG. 6, heat transfer unit 13 is configured not to provide an air layer, which interferes with heat transmission, between heater 12 and pipe 11. Temperature sensor 14 is configured to be mounted directly on holding part 13a provided on heat transfer unit 13.

Only heat transfer unit 13 with a high thermal conductivity provided between temperature sensor 14 and heater 12 allows temperature sensor 14 to measure temperature in good response to temperature changes of heater 12. This prevents temperature overshoot due to delay in response, resulting in more accurate temperature control.

As shown in FIG. 5, heater 12 has a U shape, and thus, when heater 12 is activated, the temperature is highest at curved part 12b of heater 12, and the temperature is lowest at end 12c of heater 12.

Pipe 11 is disposed inside U-shaped heater 12 so as to be substantially parallel to heater 12. Curved part 12b is disposed close to steam outlet 11b of pipe 11 (refer to FIGs. 2 and 3), and end 12c is disclosed close to steam inlet 11a of pipe 11. With this configuration, the temperature gradually increases from steam inlet 11a toward steam outlet 11b.

Steam passing through the inside of pipe 11 is as well heated by heat exchange with the inner surface of pipe 11, which gradually increases the temperature of steam inside pipe 11 from steam inlet 11a toward steam outlet 11b. This provides a high logmean temperature difference from the steam temperature, increasing the heat exchange efficiency.

Heat exchange promoting unit 15 is designed so that the external diameter of helical body 15b is smaller than the internal diameter of pipe 11; and the internal diameter of helical body 15b is larger than the diameter of shaft 15a. This allows shaft 15a and helical body 15b to be smoothly incorporated into pipe 11.

Pipe 11 and helical body 15b are positioned by welding a given area, as are helical body 15b and shaft 15a. It is, however, not easy to completely weld the gaps between helical body 15b and pipe 11 and between helical body 15b and shaft 15a along the surface of helical body 15b.

Accordingly, there are gaps formed between pipe 11 and helical body 15b and between helical body 15b and shaft 15a. Steam (steam Sb in FIG. 7) flowing through these gaps along pipe 11, not along helical body 15b, results in a lower heat exchange efficiency than that flowing along helical body 15b. This may prevent achieving a desired temperature rise.

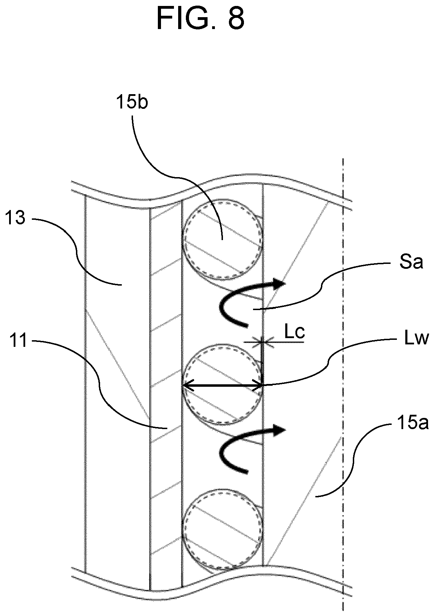

FIG. 8 is a main part sectional view of superheated steam generator 10a, showing steam flowing inside the pipe after helical body 15b has undergone thermal expansion. As shown in FIG. 8, there are clearances Lc provided between pipe 11 and helical body 15b and between helical body 15b and shaft 15a. As described above, this allows shaft 15a and helical body 15b to be smoothly incorporated into pipe 11.

When heater 12 is activated to increase the temperature of helical body 15b, helical body 15b thermally expands in the direction of wire diameter Lw to fill or to narrow the gaps between pipe 11 and helical body 15b and between helical body 15b and shaft 15a. This increases the amount of steam moving along helical body 15b to provide higher heat exchange efficiency.

In this embodiment, heater 12 as a heat source is disposed outside pipe 11, and thus heat from heater 12 is discharged from the surface of heat transfer unit 13 to the outside through heat transfer unit 13, which lowers the heating efficiency.

To reduce the heat dissipation from the surface of heat transfer unit 13, heat transfer unit 13 is covered with a heat insulator. For heat transfer unit 13 made of aluminum, the heat conductivity from heater 12 to the aluminum surface, which is in contact with the outside air, is approximately 250 W/mK. The surface of heat transfer unit 13 is likely to be high in temperature, resulting in a large temperature difference from the outside air to increase the heat dissipation.

Accordingly, if heat transfer unit 13 is covered with a heat insulator that has high heat resistance (e.g., ceramic fiber) and a heat conductivity of approximately 0.1 W/mK, the rise of temperature at the surface of the heat insulator in contact with the outside air is suppressed to reduce the heat dissipation loss.

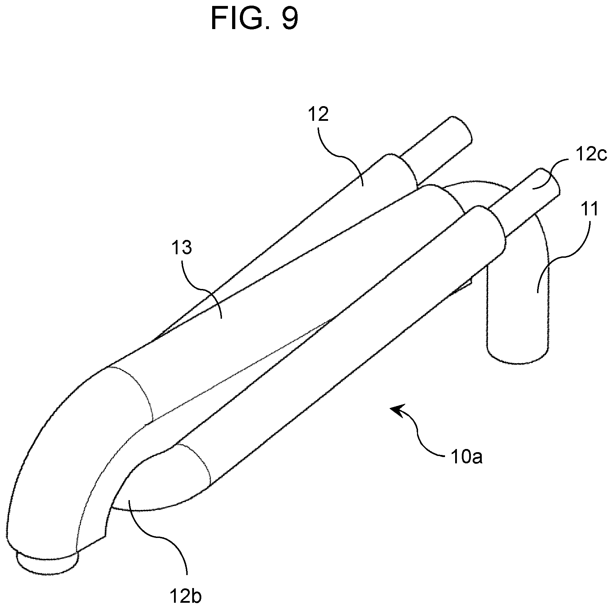

As shown in FIG. 4, the central axis of heater 12 coincides with the central axis of a portion of pipe 11 disposed inside heater 12 when superheated steam generator 10a is viewed from the side. The present disclosure, however, is not limited to this example. FIG. 9 is a perspective view of superheated steam generator 10a, showing another configuration example. As shown in FIG. 9, heater 12 may be configured so that curved part 12b is positioned under pipe 11 and end 12c is positioned above pipe 11.

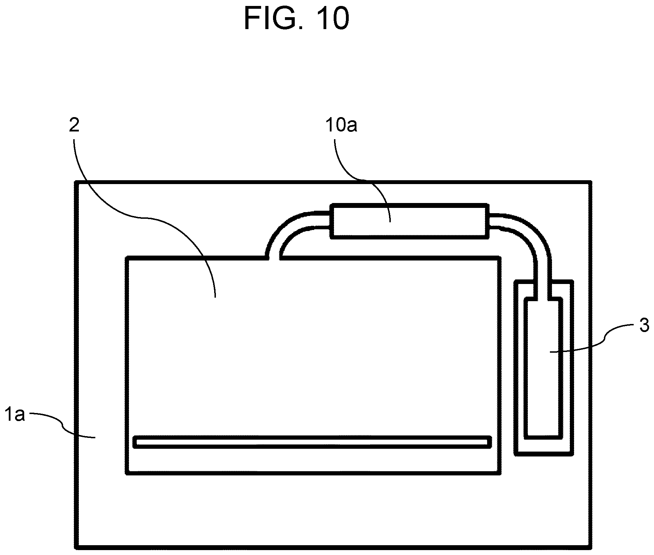

Superheated steam generator 10a of this embodiment can be incorporated into oven 1a that cooks using superheated steam as shown in FIG. 10 for example.

FIG. 10 is a schematic diagram of oven 1a that includes superheated steam generator 10a. As shown in FIG. 10, superheated steam generator 10a heats steam at a temperature near 100°C generated by boiler 3 to 100°C or higher to produce superheated steam, and then sends the superheated steam to heating chamber 2. This allows oven 1a to cook using superheated steam. Superheated steam generator 10a can be used for not only an oven but also a rice cooker and a microwave oven.

### SECOND EXEMPLARY EMBODIMENT

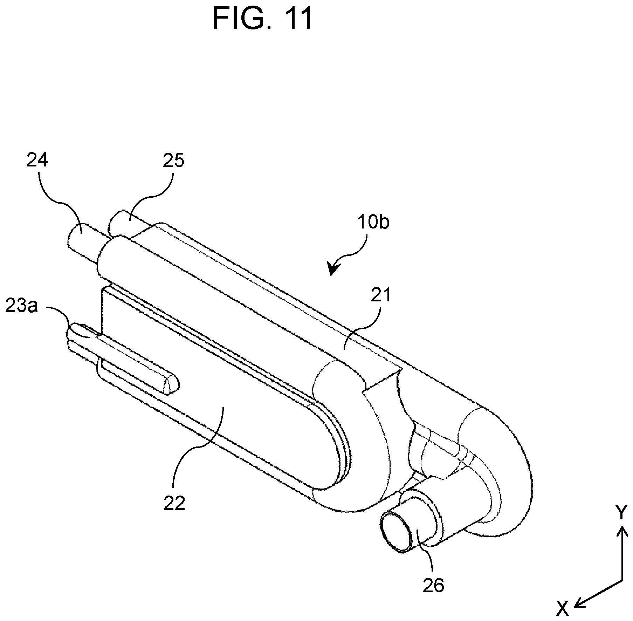

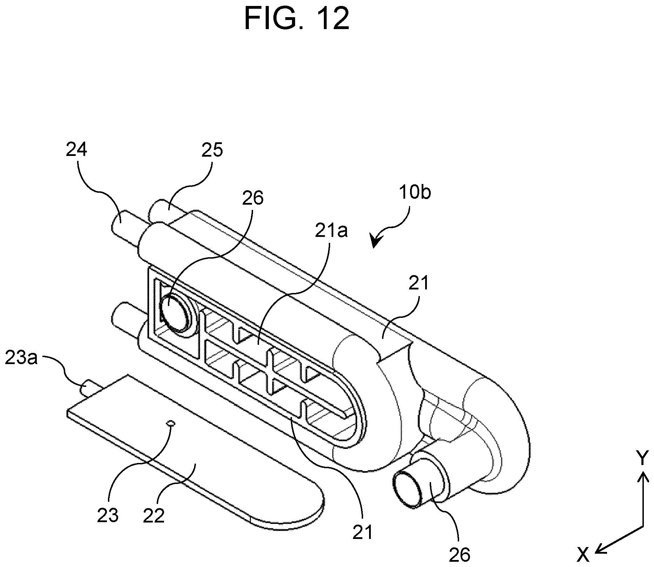

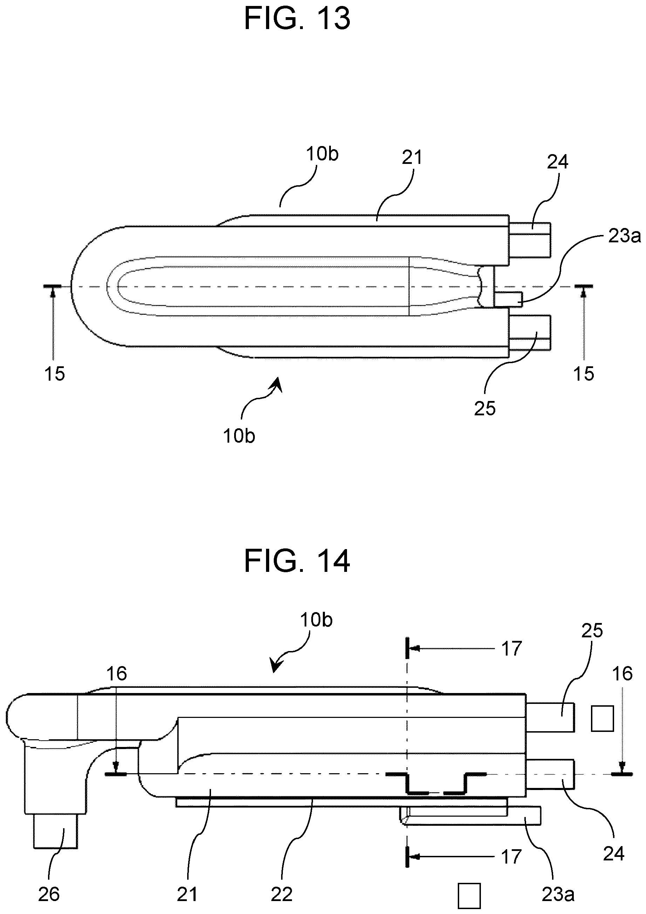

Hereinafter, a description is made of superheated steam generator 10b according to the second exemplary embodiment of the present disclosure referring to FIGs. 11 through 18. FIG. 11 is a perspective view of superheated steam generator 10b. FIG. 12 is an exploded perspective view of superheated steam generator 10b. FIG. 13 is an external view of superheated steam generator 10b, viewed in direction X shown in FIG. 11.

As shown in FIGs. 11 through 13, superheated steam generator 10b includes heating container 21 having internal space 21a, cover 22 covering the opening of heating container 21, and feed water pipe 23a attached on the outer side surface of cover 22.

Feed water pipe 23a feeds water to internal space 21a through water feed opening 23 that is one end of feed water pipe 23a. There are some fins formed in internal space 21a so that water fed through water feed opening 23 flows while meandering in internal space 21a. Internal space 21a is formed in a substantially rectangular parallelepiped, where its one short side is formed in a U shape.

Superheated steam generator 10b further includes vaporizing heater 24 and overheating heater 25, both formed in a U shape. There are vaporizing heater 24, overheating heater 25, and pipe 26 embedded into heating container 21 so that they are in tight contact with internal space 21a.

Vaporizing heater 24 heats heating container 21 to vaporize water fed to internal space 21a through water feed opening 23. One end of pipe 26 communicates with internal space 21a. Pipe 26 passes steam generated in internal space 21a. Overheating heater 25, disposed outside pipe 26, heats pipe 26 to overheat steam passing through the inside of pipe 26.

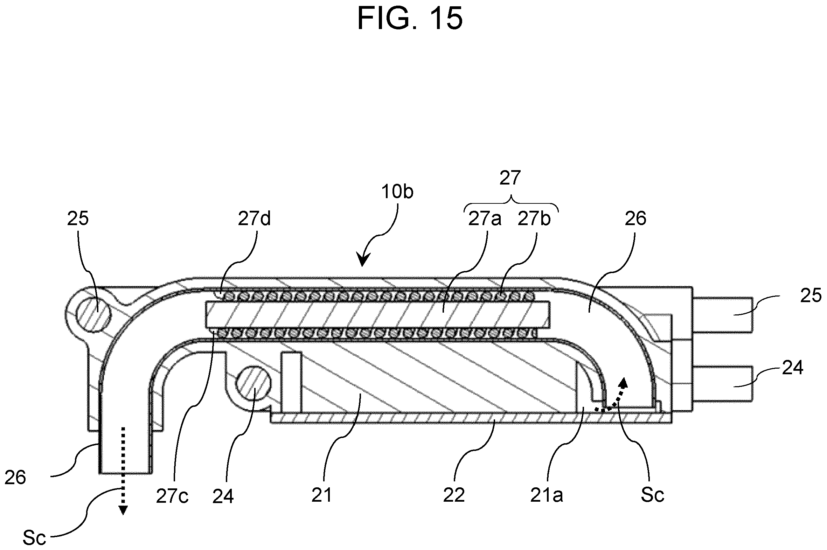

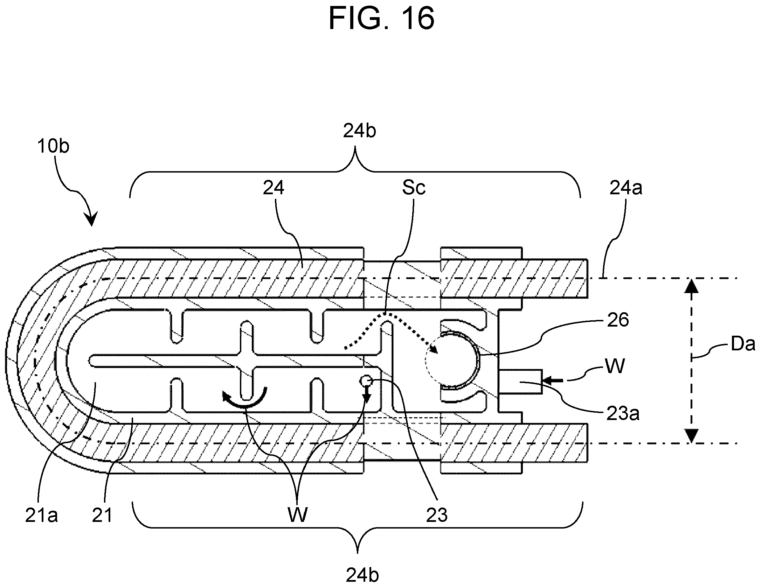

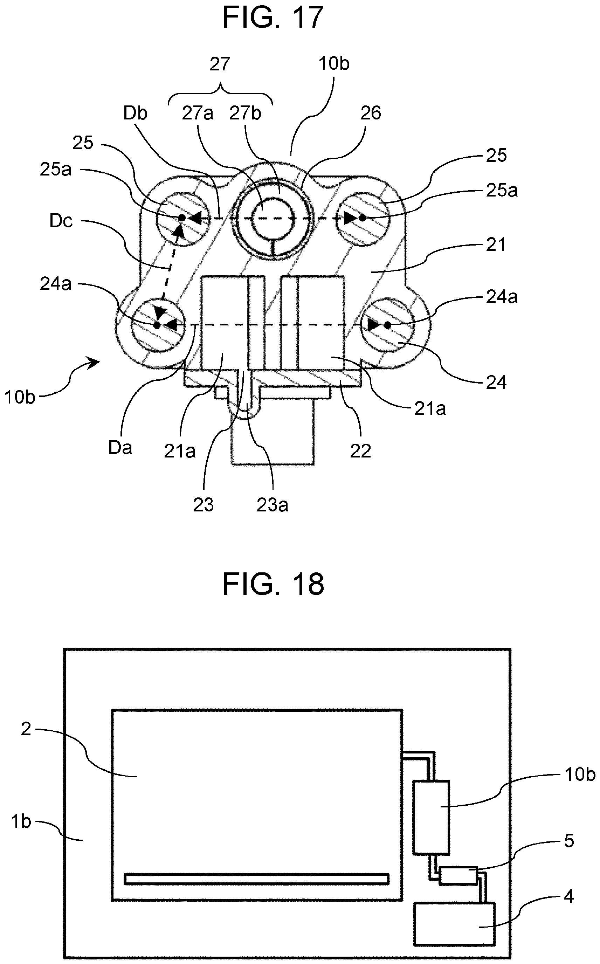

FIG. 14 is an external view of superheated steam generator 10b, viewed in direction Y in FIG. 11. FIG. 15 is a sectional view taken along line 15-15 in FIG. 13. FIG. 16 is a sectional view taken along line 16-16 in FIG. 14. FIG. 17 is a sectional view taken along line 17-17 in FIG. 14.

As shown in FIGs. 14 and 16, water W is fed from the outside to internal space 21a through feed water pipe 23a and water feed opening 23. Water W is tap water at 0°C to 30°C. Water W, after fed to internal space 21a, passes through the flow path along straight-line part 24b of vaporizing heater 24. This facilitates the transmission of heat from vaporizing heater 24 to water W flowing through the flow path.

Water W, when passing through the flow path inside internal space 21a, is heated by heating container 21 heated by vaporizing heater 24. The flow path of heating container 21 is configured so that water W meanders. This increases the contact area between heating container 21 and water W to increase the heat exchange efficiency.

Water W heated in internal space 21a starts to vaporize when the temperature of water W reaches around 100°C. As indicated by the dotted line in FIG. 16, water W vaporizes to be steam Sc, which then moves in internal space 21a. If water W vaporizes on the way of the flow path in internal space 21a, steam Sc is overheated to 100°C or higher before reaching pipe 26.

As shown in FIGs. 15 and 16, steam Sc inside internal space 21a moves to pipe 26. As shown in FIG. 17, overheating heater 25 is provided so as to sandwich pipe 26. Heat from overheating heater 25 is transmitted to pipe 26 through heating container 21. Steam Sc at 100°C or higher passing through pipe 26 comes in contact with the inner surface of pipe 26 heated by overheating heater 25 to be overheated. The overheated steam is discharged from the other end of pipe 26 to the outside.

As shown in FIGs. 15 and 17, there is heat exchange promoting unit 27 provided in pipe 26. Heat exchange promoting unit 27 includes shaft 27a disposed at the center of pipe 26 and helical body 27b wound around shaft 27a. Shaft 27a and helical body 27b are welded to each other at connecting part 27c. Helical body 27b and pipe 26 are welded to each other at connecting part 27d.

The most part of steam Sc helically flows through the outside of shaft 27a along helical body 27b. Some part of steam Sc passes through the gaps between shaft 27a and helical body 27b and between helical body 27b and pipe 26. The steam flowing along helical body 27b increases the contact area with the inner surface of pipe 26 to increase the heat exchange efficiency.

Shaft 27a prevents steam from flowing through the central part of pipe 26, where heat from the inner surface of pipe 26 poorly transfers. Accordingly, steam flowing through the above-described gaps is to flow through the proximity of the inner surface of pipe 26, contributing to increasing the heat exchange efficiency.

The provision of heat exchange promoting unit 27 decreases the cross-sectional area of the flow path inside pipe 26. This increases the velocity of the flow of steam Sc, which increases the convection thermal flux of steam Sc at the inner surface of pipe 26. The provision of heat exchange promoting unit 27 allows heating superheated steam to 250°C or higher even if, for example, overheating heater 25 runs at a temperature lower than 300°C.

A description is made of the positional relationship between vaporizing heater 24 and overheating heater 25 referring to FIGs. 13, 14, and 17. Vaporizing heater 24 and overheating heater 25 are sheath heaters for example. As shown in FIG. 17, vaporizing heater 24 has vaporizing heater axis 24a at the central part of vaporizing heater 24. Overheating heater 25 has overheating heater axis 25a at the central part of overheating heater 25.

Each of vaporizing heater 24 and overheating heater 25, if formed in a U shape, has two straight-line parts like straight-line part 24b of vaporizing heater 24 shown in FIG. 16. As shown in FIG. 17, if vaporizing heater 24 and overheating heater 25 are disposed so that their straight-line parts are parallel to each other, axis-to-axis distance Da of vaporizing heater 24 is the maximum value of the axis-to-axis distance of straight-line part 24b of vaporizing heater 24. Axis-to-axis distance Db of overheating heater 25 is the maximum value of the axis-to-axis distance of the straight-line part of overheating heater 25.

In superheated steam generator 10b, axis-to-axis distance Dc is the minimum value of the axis-to-axis distance between vaporizing heater 24 and overheating heater 25. Axis-to-axis distance Dc is smaller than axis-to-axis distances Da and Db.

This configuration facilitates the transmission of heat from vaporizing heater 24 to the proximity of overheating heater 25, and thus heat from vaporizing heater 24 can be used for heating steam passing through pipe 26. Reversely, this configuration facilitates the transmission of heat from overheating heater 25 to the proximity of vaporizing heater 24, and thus heat from overheating heater 25 can be used for vaporizing water.

Each of vaporizing heater 24 and overheating heater 25 is not limited to a U-shaped heater. Each of them may be formed of two or more linear heaters, or may be a heater that has been bent twice or more.

These configurations also provide the same advantage if the maximum value of the axis-to-axis distance of the straight-line part of the vaporizing heater and that of the overheating heater are smaller than the minimum value of the axis-to-axis distance between the vaporizing heater and the overheating heater.

Superheated steam generator 10b is assumed to be used as follows. First, overheating heater 25 is preheated to a given temperature of 100°C or higher. Subsequently, water is fed to internal space 21a, and the water is vaporized by vaporizing heater 24. The steam vaporized is passed through pipe 26 heated by overheating heater 25 for overheating. This generates superheated steam at a given temperature of 100°C or higher. The superheated steam is discharged to the outside.

It is assumed that the specific heat of water is 4.2 J/(g • °C ) and its vaporization heat is 2,250 J/g. When water at 10° C is fed at 0.3 g/s, at least a power of approximately 790 W is required to vaporize the water in one second using vaporizing heater 24.

It is assumed that the specific heat of vapor is 2.1 J/(g • °C). When steam at 100° C is passed through pipe 26 at 0.3 g/s, at least a power of approximately 100 W is required to raise the temperature of the steam to 250°C using overheating heater 25. In this way, overheating heater 25 consumes less power than vaporizing heater 24.

To overheat steam, however, the temperature of overheating heater 25, pipe 26, and heating container 21 around pipe 26 also needs to be raised to a given temperature at the preheating stage. Insufficient preheating time may not complete preheating within the preheating time at a power of 100 W.

Reversely, if overheating heater 25 has a power consumption of 100 W or higher to complete preheating within the preheating time, the power consumption becomes excessive after preheating is completed. To run overheating heater 25 at around a given temperature, overheating heater 25 is repeatedly turned on and off. If the power consumption that can be used by the entire superheated steam generator is limited, power when overheating heater 25 is off cannot be used as heat, but is waste.

For example, the assumption is made that the power consumption of the entire superheated steam generator is 1,300 W or lower, and a power of 600 W is required to raise the temperature of overheating heater 25, pipe 26, and heating container 21 around pipe 26 to a given temperature within the preheating time. In this case, power consumption that can be used by vaporizing heater 24 is 700 W or lower. For this reason, power to vaporizing heater 24 is insufficient to vaporize water at 10°C fed at 0.3 g/s in one second.

To overheat steam, a power of 100 W is sufficient. Accordingly, after preheating is completed, insufficient power is consumed at vaporizing heater 24; a power of 500 W is a surplus for overheating heater 25.

In this embodiment, axis-to-axis distance Dc between vaporizing heater 24 and overheating heater 25 is made smaller. This allows heat from overheating heater 25 generated using surplus power after preheating has been completed to be transmitted to the proximity of vaporizing heater 24. This allows compensating insufficient power consumption of vaporizing heater 24.

Reversely, at the preheating stage, heat from vaporizing heater 24 is transmitted to the proximity of overheating heater 25. This heats overheating heater 25, pipe 26, and heating container 21 around pipe 26.

Superheated steam generator 10b of this embodiment can be incorporated into oven 1b that cooks using superheated steam as shown in FIG. 18 for example.

FIG. 18 is a schematic diagram of oven 1b that includes superheated steam generator 10b. As shown in FIG. 18, pump 5 feeds water stored in water storage tank 4 to superheated steam generator 10b. Superheated steam generator 10b generates superheated steam at 100°C or higher from the water and feeds the superheated steam to heating chamber 2. This allows oven 1b to cook using superheated steam. Superheated steam generator 10b can be used for not only an oven but also a rice cooker and a multifunctional microwave oven.

### THIRD EXEMPLARY EMBODIMENT

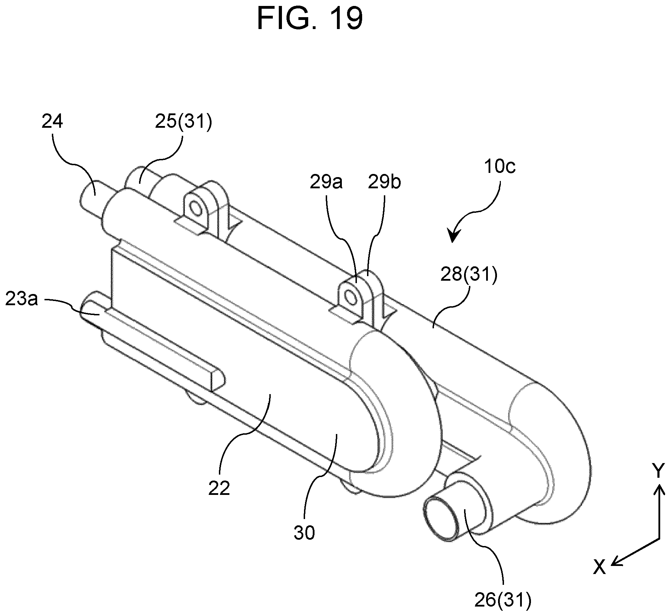

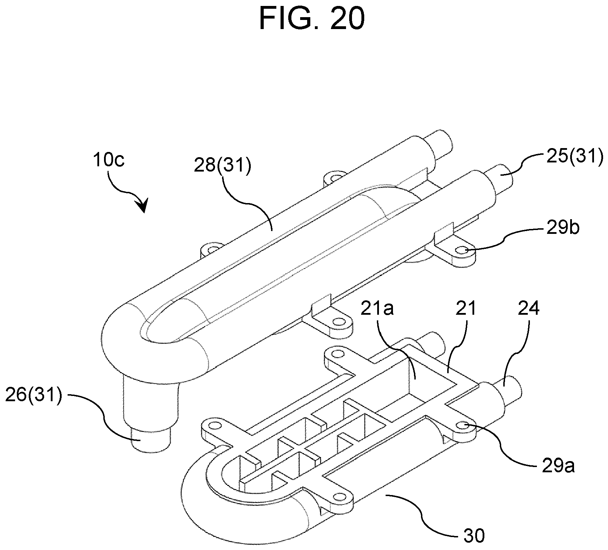

Hereinafter, a description is made of superheated steam generator 10c according to the third exemplary embodiment of the present disclosure referring to FIGs. 19 and 20. FIG. 19 is a perspective view of superheated steam generator 10c. FIG. 20 is an exploded perspective view of superheated steam generator 10c.

In this embodiment, items different from those of the second embodiment are described; items same as those of the second embodiment are omitted.

As shown in FIGs. 19 and 20, superheated steam generator 10c includes vaporizing unit 30 having connecting part 29a and overheating unit 31 having connecting part 29b. Vaporizing unit 30 and overheating unit 31 are detachably joined to each other with connecting parts 29a and 29b.

Vaporizing unit 30 includes heating container 21, feed water pipe 23a that feeds heating container 21 with water, and vaporizing heater 24. Overheating unit 31 includes overheating heater 25, pipe 26, and heat transfer unit 28 provided between overheating heater 25 and pipe 26.

In overheating unit 31, heat transfer unit 28 covers the peripheries of overheating heater 25 and pipe 26, and the gap between overheating heater 25 and pipe 26. This causes heat from overheating heater 25 to be transmitted to pipe 26 through heat transfer unit 28.

In this embodiment, when vaporizing unit 30 and overheating unit 31 are joined to each other, a heat insulator or an air layer can be provided on the contact surface between vaporizing unit 30 and overheating unit 31. This suppresses heat from vaporizing heater 24 or overheating heater 25 being transmitted to the proximity of overheating heater 25 or vaporizing heater 24.

That is, in overheating unit 31, heat near pipe 26 is important for overheating steam. However, if water comes in contact with the proximity of pipe 26 to excessively deprive heat, the amount of heat near pipe 26 becomes short, possibly resulting in steam passing through pipe 26 insufficiently overheated.

According to this embodiment, a heat insulator for example is provided at part of the contact position between vaporizing unit 30 and the proximity of pipe 26, which suppresses heat transmission from the proximity of pipe 26 to vaporizing unit 30. This maintains the amount of heat for overheating steam passing through the inside of pipe 26.

### INDUSTRIAL APPLICABILITY

A superheated steam generator of the present disclosure is applicable not only to a cooker but also to other devices that use superheated steam such as a dryer and sterilizer.

### REFERENCE MARKS IN THE DRAWINGS

- 1a, 1b: oven
- 2: heating chamber
- 3: boiler
- 4: water storage tank
- 5: pump
- 10a, 10b, 10c: superheated steam generator
- 11, 26, 61: pipe
- 11a: steam inlet
- 11b: steam outlet
- 12, 52: heater
- 12a, 52b: heating unit
- 12b: curved part
- 12c, 52a: end
- 13, 28: heat transfer unit
- 13a: holding part
- 14: temperature sensor
- 15, 27: heat exchange promoting unit
- 15a: shaft
- 15b: helical body
- 15c: connecting part
- 15d: connecting part
- 21: heating container
- 21a: internal space
- 22: cover
- 23: water feed opening
- 23a: feed water pipe
- 24: vaporizing heater
- 24a: vaporizing heater axis
- 24b: straight-line part
- 25: overheating heater
- 25a: overheating heater axis
- 30: vaporizing unit
- 31: overheating unit
- 27a: shaft
- 27b: helical body
- 27c, 27d, 29a, 29b: connecting part
- 51: case
- 51a: sidewall
- 51c: steam inlet
- 51d: superheated steam outlet
- 62: heat exchanger
- 63: coil bobbin
- 64: induction heating coil

## Claims

1. A superheated steam generator comprising:
a pipe through which steam passes;
a heat exchange promoting unit disposed in the pipe;
a heater disposed outside the pipe and substantially parallel to the pipe; and
a heat transfer unit disposed between the pipe and the heater.

2. The superheated steam generator of claim 1, wherein the heat exchange promoting unit includes a shaft and a helical body wound around the shaft.

3. The superheated steam generator of claim 1, wherein the heater has a curved shape, a curved part of the heater is disposed at a part of the pipe close to a steam outlet of the pipe, and an end of the heater is disposed at a part of the pipe close to a steam inlet of the pipe.

4. The superheated steam generator of claim 2, wherein a temperature rise of the helical body causes the helical body to thermally expand, thereby filling or narrowing a gap between the pipe and the helical body and a gap between the helical body and the shaft.

5. The superheated steam generator of claim 1, further comprising a heat insulator covering the heat transfer unit.

6. The superheated steam generator of claim 1, further comprising:
a heating container;
a water feed opening through which water is fed to the heating container; and
a vaporizing heater that heats the heating container to vaporize water fed to the heating container,
wherein the pipe is configured to pass steam generated by the vaporizing heater,
wherein the heater is an overheating heater configured to heat the pipe to overheat steam passing through an inside of the pipe,
wherein each the vaporizing heater and the overheating heater has two or more straight-line parts, and
wherein a minimum value of an axis-to-axis distance between the vaporizing heater and the overheating heater is smaller than a maximum value of an axis-to-axis distance of a straight-line part of the vaporizing heater, and is smaller than a maximum value of an axis-to-axis distance of a straight-line part of the overheating heater.

7. The superheated steam generator of claim 6,
wherein the heating container is configured so that the water fed through the water feed opening moves along the vaporizing heater, and
wherein the pipe is configured so that the steam generated by the vaporizing heater moves along the vaporizing heater or the overheating heater.

8. The superheated steam generator of claim 6, wherein the vaporizing heater, the pipe, and the overheating heater are in tight contact with the heating container.

9. The superheated steam generator of claim 6, further comprising:
a heat transfer unit provided between the pipe and the overheating heater; and
a vaporizing unit having the heating container, the water feed opening, and the vaporizing heater; and
an overheating unit having the pipe, the overheating heater, and the heat transfer unit,
wherein the vaporizing unit and the overheating unit are joined together with a connecting part.

10. A cooker comprising the superheated steam generator of one of claims 1 through 9.
